# EUROPÄISCHE PATENTANMELDUNG

(11) **EP 1 109 348 A2**
(43) Veröffentlichungstag der Anmeldung: **20.06.2001**
(21) Anmeldenummer: 00126561.0
(22) Anmeldetag: 12.12.2000
(51) Int. Cl.: H04L 5/16, G06F 11/00

(54) **Entkopplungseinheit für Bussysteme**

(30) Priorität: 16.12.1999 DE 19960859
(71) Anmelder: TRW Automotive Electronics & Components GmbH & Co. KG, 78315 Radolfzell (DE)
(72) Erfinder: Necker, Karl-Heinz, D-78345 Moos-Bankholzen (DE); Güttler, Peter, 78467 Konstanz (DE); Oser, Eberhard, 78239 Rielasingen (DE); Dohrmann, Stephan, 78462 Konstanz (DE)
(74) Vertreter: Degwert, Hartmut, Dipl.-Phys.

(57) **Zusammenfassung**

Die Entkopplungseinheit für zwei miteinander verbundene Bussysteme enthält eine Verbindungsschaltung zwischen zwei Schnittstellenschaltungen (10, 12). Die erste Schnittstellenschaltung (10) hat Anschlüsse für das eine Bussystem und einen bidirektionalen Daten-Anschluß für die Verbindungsschaltung. Die zweite Schnittstellenschaltung (12) hat Anschlüsse für das andere Bussystem und einen bidirektionalen Daten-Anschluß für die Verbindungsschaltung. Die Verbindungsschaltung enthält ein Filter (14, 16), das anomale dominante Signale unterdrückt und normale Signale zwischen den Bussystemen vermittelt.

## Beschreibung

Die Erfindung betrifft eine Kopplungseinheit für zwei miteinander verbundene Bussysteme.

Wenn zwei gleichartige oder verschiedenartige Bussysteme miteinander verbunden werden, können Fehlfunktionen, die in einem der Bussysteme auftreten, entsprechende Fehlfunktionen in dem anderen Bussystem zur Folge haben. Wenn ein Bussystem dem anderen Bussystem einen Signalzustand aufzwingt, spricht man von einem dominanten Signal. Wenn das eine Bussystem durch ein permanentes dominantes Signal gestört ist, fällt auch das damit verbundene andere Bussystem aus.

Die Erfindung befaßt sich besonders mit Bussystemen in Fahrzeugen. Die zunehmend in Fahrzeugen installierten Bussysteme können nach verschiedenen Aufgabenbereichen unterteilt werden, denen unterschiedliche Prioritäten zukommen. Man unterscheidet beispielsweise zwischen peripheren Bussystemen, die den äußeren Fahrzeugbereichen zugeordnet sind, und internen Bussystemen für Steuerungs- und Sicherheitsfunktionen. Da die verschiedenen Bussysteme miteinander kommunizieren, besteht die Gefahr der Beeinträchtigung eines Bussystems im Falle von Fehlfunktionen anderer Bussysteme. Im Fahrzeug sind periphere Bussysteme unfallgefährdet. Ein Fahrzeugaufprall kann beispielsweise zu einem Kurzschluß in einem peripheren Bussystem führen. Das von diesem dann permanent erzeugte dominante Signal kann das interne Bussystem stören oder gar außer Funktion setzen.

Durch die Erfindung wird eine Entkopplungseinheit für zwei miteinander verbundene Bussysteme geschaffen, die mit einfachen Mitteln verhindert, daß ein gestörtes Bussystem die Funktion des anderen Bussystems beeinträchtigt.

Gemäß einer ersten Ausführung der Erfindung enthält die Entkopplungseinheit zwei Schnittstellenschaltungen und dazwischen eine Verbindungsschaltung. Die erste Schnittstellenschaltung hat einen bidirektionalen Bus-Anschluß für das eine Bussystem und einen bidirektionalen Daten-Anschluß für die Verbindungsschaltung. Die zweite Schnittstellenschaltung hat einen bidirektionalen Bus-Anschluß für das andere Bussystem und einen bidirektionalen Daten-Anschluß für die Verbindungsschaltung. Die Verbindungsschaltung enthält ein Filter, das anomale dominante Signale unterdrückt und normale Signale zwischen den zwei Bussystemen vermittelt. Da die Entkopplungseinheit anomale dominante Signale aus einem Bussystem unterdrückt, können diese die Funktion des anderen Bussystems nicht beeinträchtigen.

Die Schnittstellenschaltungen setzen die busseitig empfangenen Signale in entsprechende Logikpegel um, die von der Verbindungsschaltung verarbeitet werden. Die von der Verbindungsschaltung an die Schnittstellenschaltungen abgegebenen Logikpegel werden von diesen in entsprechende Bussignale umgesetzt.

Die erfindungsgemäße Entkopplungseinheit kann aus einfachen diskreten Elektronikkomponenten aufgebaut werden. Dadurch ergibt sich neben einer sicheren Funktion auch ein geringer Kostenaufwand. Gegenüber einer Mikroprozessor-Lösung ergibt sich zudem der Vorteil der Vermeidung von Störstrahlung.

Gemäß einer zweiten Ausführung der Erfindung enthält die Entkopplungseinheit einen Gleichspannungs-Detektor, der bei Auftreten einer Gleichspannung zwischen den Leitungen der Bussysteme ein Ansteuersignal abgibt. Darüber hinaus ist ein Signalausfall-Detektor vorgesehen, der bei ausbleibenden Impulssignalen auf einem der Bussysteme ein Ansteuersignal abgibt. Schließlich enthält die Entkopplungseinheit eine Treiberschaltung, die ansprechend auf die Ansteuersignale der beiden Detektoren einen Unterbrecher aktiviert, der im aktivierten Zustand die Bussysteme galvanisch voneinander trennt.

Der Vorteil der zweiten Ausführung liegt darin, daß die in der ersten Ausführungsform vorhandene Laufzeitverzögerung der Signale zwischen den zwei Bussystemen vermieden wird.

Vorteilhafte Weiterbildungen der Erfindung ergeben sich aus der folgenden Beschreibung einer Ausführungsform der Entkopplungseinheit und aus den Zeichnungen, auf die Bezug genommen wird. In den Zeichnungen zeigen:
Figur 1 ein Blockschaltbild der Kopplungseinheit;
Figur 2 ein Blockschaltbild einer alternativen Ausführungsform der Kopplungseinheit.

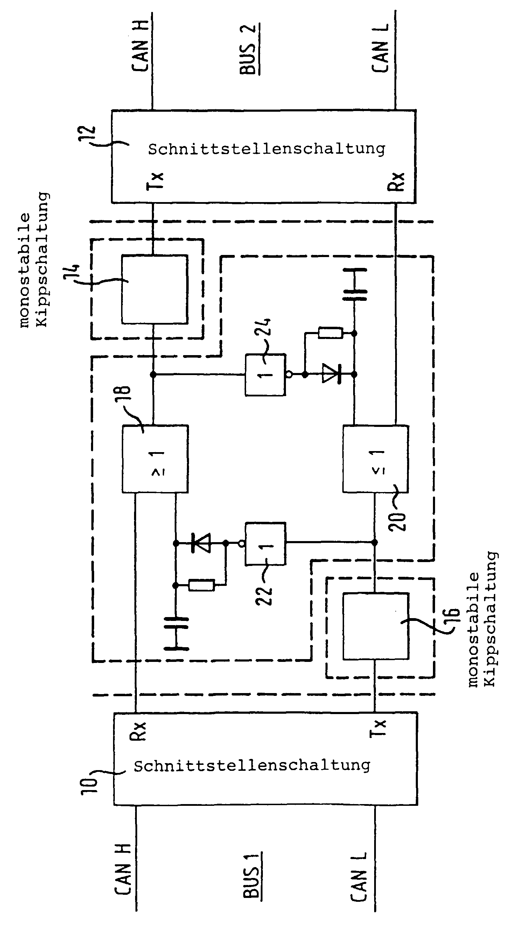

Bei der beschriebenen Ausführungsform nach Figur 1 wird angenommen, daß zwei Zweidraht-Bussysteme vom Typ CAN durch eine Entkopplungseinheit miteinander verbunden sind. Die Bussysteme sind in der Zeichnung mit Bus 1 und Bus 2 bezeichnet. Jedes der beiden Bussysteme ist an eine Schnittstellenschaltung 10, 12 angeschlossen. Bei diesen Schnittstellenschaltungen handelt es sich um handelsübliche Sende/Empfangs-Schaltungen, insbesondere CAN Transceiver. Zwischen den Schnittstellenschaltungen 10, 12 ist eine Verbindungsschaltung angeordnet. Diese Verbindungsschaltung ist zwischen den Schnittstellenschaltungen 10, 12 symmetrisch aufgebaut, so daß sie bidirektional dieselbe Funktionalität hat. Die Signalübertragung zwischen den Schnittstellenschaltungen 10, 12 erfolgt jeweils von einem Anschluß Rx zu einem Anschluß Tx. Im Signalweg zwischen einem Anschluß Rx und einem Anschluß Tx liegt jeweils ein Filter, das anomale dominante Signale unterdrückt, normale Signale jedoch durchläßt. Bei der bevorzugten Ausführungsform sind diese Filter als monostabile Kippschaltungen 14, 16 ausgebildet. Wenn der an einem solchen Filter ankommende Signalpegel unverändert bleibt, was einem dominanten Signal entspricht, springt der Ausgang des Filters nach Ablauf der Eigenzeit der Kippschaltung auf den entgegengesetzten Signalpegel, der dann einem rezessiven Signal entspricht, das die Funktion des angeschlossenen Bussystems nicht beeinträchtigt. Impulssignale werden hingegen von den Kippschaltungen durchgelassen.

Da in den Schnittstellenschaltungen 10, 12 die Anschlüsse Rx und Tx intern gekoppelt sind, enthält die Verbindungsschaltung zusätzlich Mittel zur Rückkopplungsunterbrechung. In jedem Signalweg zwischen einem Anschluß Rx und einem Anschluß Tx liegt ein OR-Gatter 18, 20 mit zwei Anschlüssen. An den ersten Anschluß der OR-Gatter 18, 20 ist jeweils ein Anschluß Rx der Schnittstellenschaltungen 10, 12 angelegt. An den zweiten Eingang der OR-Gatter 18, 20 ist jeweils das durch einen Inverter 22, 24 invertierte Ausgangssignal des anderen OR-Gatters angelegt. Eine RC-Kombination mit einer Diode sorgt jeweils für eine geringe Verlängerung des an den entsprechenden Eingang der OR-Gatter 18 und 20 angelegten Signalimpulses. Durch diese einfache Rückkopplungsunterdrückung wird erreicht, daß jeweils ein von einem der OR-Gatter 18, 20 durchgelassenes Signal von dem anderen gesperrt wird.

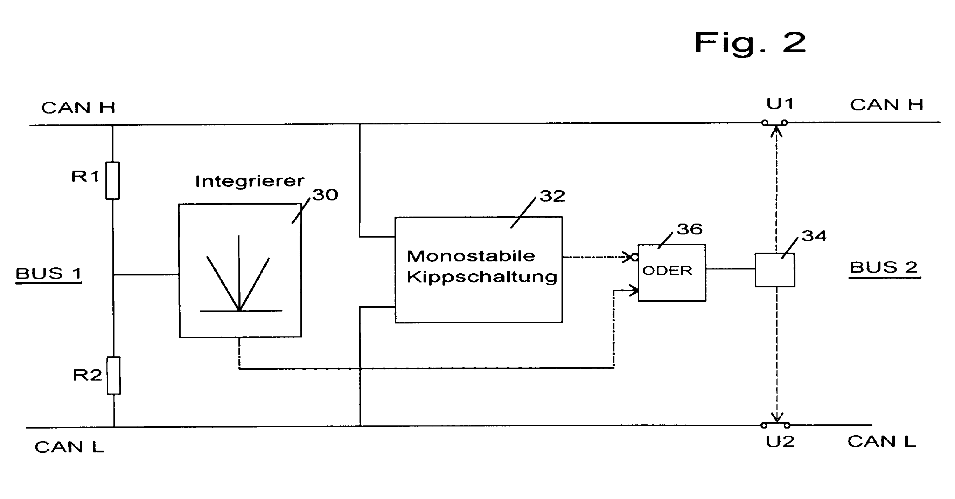

Bei der in Figur 2 gezeigten Ausführungsform befindet sich zwischen dem ersten Bussystem und dem zweiten Bussystem ein zweipoliger Unterbrecher U1, U2, der im Ruhezustand die Verbindung zwischen den zwei Bussystemen herstellt und im aktivierten Zustand die Bussysteme galvanisch voneinander trennt. Das erste Bussystem umfaßt einen Gleichspannungs-Detektor 30, dessen Eingangssignal an einem zwischen den zwei Leitungen des ersten Bussystems angeordneten Spannungsteilers aus zwei in Reihe geschalteten Widerständen R₁, R2 abgegriffen wird. Der Gleichspannungs-Detektor 30 weist einen Integrator auf, der bei Erreichen eines bestimmten Potentialpegels, d.h. wenn am Eingang des Gleichspannungs-Detektors 30 während einer bestimmten Zeit ein Gleichspannungssignal anliegt, ein Ansteuersignal an eine OR-Schaltung 36 abgibt, die dann ihrerseits eine Treiberschaltung 34 ansteuert, um den Unterbrecher U₁, U₂ zu aktivieren und so die Bussysteme galvanisch voneinander zu trennen.

Parallel zu dem Spannungsteiler ist ein Signalausfall-Detektor 32 geschaltet, der eine retriggerbare monostabile Kippstufe aufweist. Am Eingang des Signalausfall-Detektors 32 liegt ein Impulssignal an, das bei intaktem Bus die retriggerbare Kippschaltung des Signalausfall-Detektors dauernd im metastabilen Zustand hält. Beim Ausbleiben der Impulse (gestörter Bus) schaltet die Kippschaltung nach Ablauf ihrer Eigenzeit in den entgegengesetzten Schaltzustand um und verbleibt in diesem Zustand. Das entsprechende Ausgangssignal des Signalausfall-Detektors 32 ist an einen invertierenden Eingang der OR-Schaltung 36 angelegt, so daß auch in diesem Fall die beiden Bussysteme galvanisch getrennt werden. Da im Falle eines Kurzschlusses keine Impulssignale an den Eingang des Signalausfall-Detektors gegeben werden, kann damit ein Kurzschluß in dem ersten Bussystem erkannt und können die zwei Bussysteme voneinander getrennt werden, um eine Beeinträchtigung des zweiten Bussystems zu verhindern.

Der Vorteil der zweiten Ausführung liegt darin, daß die in der Ausführungsform gemäß Figur 1 vorhandene Laufzeitverzögerung der Signale zwischen den zwei Bussystemen, die sich durch die Eigenzeit der monostabilen Kippstufen 14, 16 ergeben, vermieden werden.

So, wie die Schaltung in Fig. 2 dargestellt ist, ist nur der Bus 2 gegen eine eventuell auftretende Störung im Bus 1 geschützt. Um zu erreichen, daß jeder Bus gegen eine Störung im jeweils anderen geschützt ist, wird die in Fig. 2 gezeigte Schaltungseinheit auch auf Seiten von Bus 2 vorgesehen, und zwar in gespiegelter Anordnung in Bezug auf die Treiberschaltung 34. Dabei können dann die beiden Schaltungseinheiten auf die eine Treiberschaltung 34 wirken oder es wird für jede Einheit eine eigene Treiberschaltung inklusive Unterbrecher vorgesehen.

## Patentansprüche

1. Entkopplungseinheit für zwei miteinander verbundene Bussysteme, mit:
einer Verbindungsschaltung;
einer ersten Schnittstellenschaltung (10) mit einem bidirektionalen Bus-Anschluß für das eine Bussystem und einem bidirektionalen Daten-Anschluß (Tx, Rx) für die Verbindungsschaltung;
einer zweiten Schnittstellenschaltung (12) mit einem bidirektionalen Bus-Anschluß für das andere Bussystem und einem bidirektionalen Daten-Anschluß (Rx, Tx) für die Verbindungsschaltung;
wobei die Verbindungsschaltung ein Filter (14, 16) enthält, das anomale dominante Signale unterdrückt und normale Signale zwischen den Bussystemen vermittelt.

2. Entkopplungseinheit nach Anspruch 1, bei dem die Schnittstellenschaltungen (10, 12) Bussignale in Logikpegel und Logikpegel in Bussignale umsetzen.

3. Entkopplungseinheit nach Anspruch 1 oder 2, bei dem anomale dominante Signale eines Bussystems einen Defekt desselben anzeigen und während einer mit dem Protokoll des Bussystems inkompatiblen Zeitdauer auftreten.

4. Entkopplungseinheit nach Anspruch 2 oder 3, bei dem das Filter (14, 16) eine monostabile Kippschaltung enthält.

5. Entkopplungseinheit nach einem der vorstehenden Ansprüche, bei der die Verbindungsschaltung eine Gatter-Anordnung (18, 20) enthält, die wenigstens während der Zeit des Durchlaufs eines Signals von einem sendenden Bussystem zu dem anderen Bussystem eine Rückkopplung dieses Signals auf das sendende Bussystem unterdrückt.

6. Entkopplungseinheit nach Anspruch 5, bei dem die Gatter-Anordnung (18, 20) ein OR-Gatter mit einem ersten Signaleingang aufweist, an dem das Signal vom Daten-Anschluß (Rx) der einen Schnittstellenschaltung (10) angelegt ist, und einem zweiten Signaleingang, an den das invertierte Signal vom Daten-Anschluß (Tx) der anderen Schnittstelle (12) angelegt ist.

7. Entkopplungseinheit nach Anspruch 6, bei der das invertierte Signal durch eine RC-Kombination am zweiten Signaleingang des OR-Gatters (18, 20) verlängert anliegt.

8. Entkopplungseinheit nach einem der vorstehenden Ansprüche, bei der die Verbindungsschaltung zwischen den Schnittstellenschaltungen (10, 12) symmetrisch aufgebaut ist.

9. Entkopplungseinheit nach einem der vorstehenden Ansprüche, gekennzeichnet durch ihre Verwendung in einem Kraftfahrzeug, bei dem die Integrität des einen Bussystems unfallgefährdet ist und das andere Bussystem prioritätshöheren Funktionen zugeordnet ist.

10. Entkopplungseinheit nach Anspruch 9, bei der ein interner CAN-Bus mit einem peripheren CAN-Bus verbunden ist.

11. Entkopplungseinheit für zwei miteinander verbundene Zweileitungs-Bussysteme, mit:
einem Unterbrecher (U1, U2), der im aktiven Zustand die Bussysteme galvanisch voneinander trennt;
einem Gleichspannungs-Detektor (30), der bei Auftreten einer Gleichspannung zwischen den Leitungen eines der Bussysteme ein Ansteuersignal abgibt;
einem Signalausfall-Detektor (32), der bei ausbleibenden Impulssignalen auf einem der Bussysteme ein Ansteuersignal abgibt; und
einer Treiberschaltung (34), die ansprechend auf die Ansteuersignale den Unterbrecher (U1, U2) aktiviert.

12. Entkopplungseinheit nach Anspruch 11, bei der der Gleichspannungs-Detektor (30) einen Integrator aufweist, dessen Eingangssignal an einem zwischen den zwei Leitungen des einen Bussystems angeordneten Spannungsteiler (R1, R2) abgegriffen wird.

13. Entkopplungseinheit nach Anspruch 11 oder 12, bei der der Signalausfall-Detektor (32) ein retriggerbares Monoflop aufweist, dessen Eingangssignal zwischen den zwei Leitungen des einen Bussystems abgegriffen ist.

14. Entkopplungseinheit nach einem der Ansprüche 11 bis 13, bei der die Treiberschaltung (34) zwei durch eine OR-Funktion (36) verknüpfte Ansteuereingänge aufweist, an die die Ansteuersignale angelegt sind.
